# EUROPÄISCHE PATENTSCHRIFT

(11) **EP 3 336 377 B1**
(45) Veröffentlichungstag und Bekanntmachung des Hinweises auf die Patenterteilung: **12.02.2020**
(21) Anmeldenummer: 17207223.3
(22) Anmeldetag: 14.12.2017
(51) Int. Cl.: F16F 9/02

(54) **GASDRUCKFEDER UND VERFAHREN ZUM BETREIBEN EINER GASDRUCKFEDER**
GAS SPRING AND METHOD FOR OPERATING SAME
RESSORT À GAZ ET PROCÉDÉ DE FONCTIONNEMENT D'UN RESSORT À GAZ

(30) Priorität: 19.12.2016 DE 102016225475
(43) Veröffentlichungstag der Anmeldung: 20.06.2018
(73) Patentinhaber: Robert Bosch GmbH, 70442 Stuttgart (DE)
(72) Erfinder: Nagy, Daniel, 4032 Debrecen (HU); Szabo, Miklos, 3300 Eger (HU)

(56) Entgegenhaltungen:
- DE-A1- 2 546 057
- DE-A1- 10 238 448
- US-A1- 2003 042 661

## Beschreibung

Die Erfindung betrifft eine Gasdruckfeder.

### Stand der Technik

Gasdruckfedern herkömmlicher Bauart weisen in der Regel eine im Wesentlichen hohl ausgebildete Kammer auf, wobei die Kammer an einem axialen Endabschnitt eine Öffnung aufweist. Die Gasdruckfeder weist des Weiteren eine sich durch die Öffnung erstreckende, axial verschiebbare Kolbenstange auf sowie einen Kolben, welcher mit der Kolbenstange an einem, in der Kammer angeordneten, axialen Endabschnitt der Kolbenstange verbunden ist.

Die DE 10 2011 116 345 A1 offenbart eine Gasdruckfeder für eine Heckklappe eines Kraftfahrzeugs, mit einem Gasdruckzylinder und einer darin verschieblich geführten Kolbenstange, die an einem von dem Gasdruckzylinder vorstehenden Ende mit einer Kugelkopfaufnahme versehen ist, wobei auf der Kolbenstange zwischen der Kugelkopfaufnahme und dem Gasdruckzylinder eine Spiraldruckfeder angeordnet ist, die beim Zusammendrücken der Gasdruckfeder über einem vorbestimmten Punkt hinaus ebenfalls zusammengedrückt wird.

Die DE 25 46 057 A1 zeigt eine Verriegelungsvorrichtung für eine Gasfeder, welche mechanisch, nämlich durch ein Ineinandergreifen von Außen- und Innengewindegängen, verriegelt werden kann.

Die US 2003/0042661 A1 zeigt eine Gasfeder mit einem Zwischenkolben und mit einer Pumpe, wodurch das Volumen bzw. der Druck im Zylinderraum der Gasfeder entsprechend den geforderten Kräften angepasst werden kann.

Des Weiteren sind Gasdruckfedern am Markt erhältlich, welche es ermöglichen, den Kolben in der Kammer der Gasdruckfeder an einer spezifischen Position zu blockieren. Für bestimmte Anwendungen ist es jedoch wünschenswert, nicht nur ein Fixieren bzw. Blockieren des Kolbens in der Kammer zu bewirken, sondern eine Einstellbarkeit der axial bewegbaren Kolbenstange auf einen bestimmten Hub zu ermöglichen, wobei dieser Hub entsprechend vorgegebenen Kriterien innerhalb eines möglichen Hubs der Gasdruckfeder variierbar sein sollte.

Der Erfindung liegt somit die Aufgabe zugrunde, eine verbesserte Gasdruckfeder vorzusehen, welche eine beliebige Einstellbarkeit eines Hubs der Gasdruckfeder ermöglicht.

Die Aufgabe wird mit einer Gasdruckfeder mit den Merkmalen des Patentanspruchs 1 gelöst.

### Offenbarung der Erfindung

Die vorliegende Erfindung schafft eine Gasdruckfeder, mit einer im Wesentlichen hohl ausgebildeten Kammer, die einen ersten axialen Endabschnitt und einen zweiten axialen Endabschnitt aufweist, wobei die Kammer an dem zweiten axialen Endabschnitt eine Öffnung aufweist, mit einer sich durch die Öffnung erstreckenden, axial verschiebbaren, ersten Kolbenstange, mit einem ersten Kolben, welcher mit der ersten Kolbenstange an einem, in der Kammer angeordneten, axialen Endabschnitt der ersten Kolbenstange verbunden ist, mit einem in der Kammer zwischen dem ersten axialen Endabschnitt und dem ersten Kolben angeordneten zweiten Kolben, und Mitteln zum Feststellen und Freigeben des zweiten Kolbens in der Kammer zum Verstellen eines Hubs der ersten Kolbenstange.

Die vorliegende Offenbarung schafft des Weiteren ein nicht erfindungsgemäßes Verfahren zum Betreiben einer Gasdruckfeder. Das Verfahren umfasst ein Bereitstellen einer im Wesentlichen hohl ausgebildeten Kammer, die einen ersten axialen Endabschnitt und einen zweiten axialen Endabschnitt aufweist, wobei die Kammer an dem zweiten axialen Endabschnitt eine Öffnung aufweist.

Das Verfahren umfasst des Weiteren ein Bereitstellen einer sich durch die Öffnung erstreckenden, axial verschiebbaren, ersten Kolbenstange, ein Bereitstellen eines ersten Kolbens, welcher mit der ersten Kolbenstange an einem, in der Kammer angeordneten, axialen Endabschnitt der ersten Kolbenstange verbunden ist, ein Bereitstellen eines in der Kammer zwischen dem ersten axialen Endabschnitt und dem ersten Kolben angeordneten zweiten Kolbens und ein Feststellen oder Freigeben des zweiten Kolbens in der Kammer zum Verstellen eines Hubs der ersten Kolbenstange durch Mittel.

Eine Idee der vorliegenden Erfindung ist es, durch Vorsehen der Mittel zum Feststellen und Freigeben des zweiten Kolbens in der Kammer zum Verstellen eines Hubs der ersten Kolbenstange eine Variabilität des Hubs der Gasdruckfeder vorzusehen, sodass der Hub entsprechend vorgegebener Parameter bzw. Anforderungen frei variierbar ist.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass die Mittel zum Feststellen und Freigeben des zweiten Kolbens in der Kammer ein zwischen dem ersten axialen Endabschnitt der Kammer und dem zweiten Kolben angeordnetes Ventil aufweisen. Dies ermöglicht somit in vorteilhafter Weise ein Feststellen und Freigeben des zweiten Kolbens in der Kammer zum Verstellen des Hubs der ersten Kolbenstange der Gasdruckfeder.

Gemäß einer weiteren bevorzugten Weiterbildung ist vorgesehen, dass das Ventil dazu ausgebildet ist, in einer geöffneten Stellung einen Gasstrom zwischen einem, zwischen dem ersten axialen Endabschnitt der Kammer und dem Ventil angeordneten ersten Kammervolumen und einem, zwischen dem zweiten Kolben und dem Ventil angeordneten zweiten Kammervolumen freizugeben, und in einer geschlossen Stellung einen Gasstrom zwischen dem ersten Kammervolumen und dem zweiten Kammervolumen zu sperren. Bei geöffnetem Ventil ist der zweite Kolben aufgrund der Möglichkeit des Gasaustausches zwischen dem ersten Kammervolumen und dem zweiten Kammervolumen somit in der Kammer frei beweglich. Bei geschlossenem Ventil kann das in dem ersten Kammervolumen vorhandene Gas somit nicht entweichen und blockiert daher eine Bewegung des zweiten Kolbens in der Kammer.

Gemäß einer weiteren bevorzugten Weiterbildung ist vorgesehen, dass das Ventil in einer Grundstellung den Gasstrom zwischen dem ersten Kammervolumen und dem zweiten Kammervolumen sperrt, und durch Anlegen eines Gasdrucks in die geöffnete Stellung bewegbar ist. Somit ist in vorteilhafter Weise nur zum Lösen der Fixierung des zweiten Kolbens in der Kammer das Anlegen eines Gasdrucks erforderlich, wohingegen in fixiertem Zustand der Kolben in seiner Grundstellung fixiert verbleibt.

Gemäß der Erfindung ist vorgesehen, dass die erste Kolbenstange im Wesentlichen hohl ausgebildet ist, wobei in einem Hohlraum der ersten Kolbenstange zumindest abschnittsweise eine, im Wesentlichen hohl ausgebildete zweite Kolbenstange angeordnet ist, wobei der zweite Kolben mit der zweiten Kolbenstange an einem, dem ersten axialen Endabschnitt der Kammer zugewandten axialen Endabschnitt der zweiten Kolbenstange verbunden ist. Der zweite Kolben ist somit in vorteilhafter Weise in Verlängerung der ersten Kolbenstange zwischen dem ersten axialen Endabschnitt der Kammer und dem ersten Kolben angeordnet.

Gemäß einer weiteren bevorzugten Weiterbildung ist vorgesehen, dass an einem außerhalb der Kammer angeordneten axialen Endabschnitt der ersten Kolbenstange ein Druckluftschalter angeordnet ist, welcher mit dem Ventil in pneumatischer Verbindung steht, wobei der Druckluftschalter dazu ausgebildet ist, das Ventil anzusteuern, und wobei das Ventil durch ein 2/2-Wege-Ventil ausgebildet ist. Aufgrund der hohlen Ausbildung der ersten Kolbenstange und der zweiten Kolbenstange kann durch den Druckluftschalter somit in vorteilhafter Weise ein Gasdruck an das Ventil zum Öffnen des Ventils angelegt werden.

Gemäß einer weiteren bevorzugten Weiterbildung ist vorgesehen, dass eine dritte Kolbenstange vorgesehen ist, welche zumindest abschnittsweise in einem Hohlraum der zweiten Kolbenstange und zumindest abschnittsweise in dem Ventil angeordnet ist, wobei die dritte Kolbenstange im Wesentlichen hohl ausgebildet ist und im Bereich des Ventils eine Öffnung aufweist, welche mit einem innerhalb des zweiten Kolbens ausgebildeten vierten Kammervolumen kommuniziert. Somit kann die dritte Kolbenstange eine fluidische Verbindung mit dem innerhalb des zweiten Kolbens ausgebildeten vierten Kammervolumens herstellen.

Gemäß einer weiteren bevorzugten Weiterbildung ist vorgesehen, dass eine vierte Kolbenstange vorgesehen ist, welche zumindest abschnittsweise in einem Hohlraum der dritten Kolbenstange angeordnet ist, wobei die vierte Kolbenstange im Wesentlichen hohl ausgebildet und an einem axialen Endabschnitt der Gasdruckfeder befestigt ist, wobei dritte Kolbenstange und die vierte Kolbenstange derart zusammenwirken, dass bei einem axialen Verstellen des Ventils und einer damit verbundenen Verdrängung eines in dem vierten Kammervolumen angeordneten Gasvolumens ein Gasaustausch des vierten Kammervolumens mit einer Umgebung der Gasdruckfeder. Durch das Ermöglichen des Gasaustauschs zwischen dem vierten Kammervolumen mit der Umgebung der Gasdruckfeder kann in vorteilhafter Weise vermieden werden, das es bei der Bewegung des Ventils in dem vierten Kammervolumen je nach Bewegungsrichtung zu einem Überdruck oder Unterdruck kommt.

Gemäß einer weiteren bevorzugten Weiterbildung ist vorgesehen, dass die dritte Kolbenstange bei einer Axialbewegung des zweiten Kolbens in der Gasdruckfeder mit dem zweiten Kolben mit bewegbar ist, und durch die vierte Kolbenstange axial gelagert ist, wobei die dritte Kolbenstange bei einer Bewegung des zweiten Kolbens relativ zur vierten Kolbenstange bewegbar ist. Somit kann in vorteilhafter Weise eine gesonderte Lagerung der dritten Kolbenstange entfallen.

Gemäß einer weiteren bevorzugten Weiterbildung ist vorgesehen, dass die vierte Kolbenstange im Bereich eines axialen Endabschnitts mit einem in dem axialen Endabschnitt der Gasdruckfeder ausgebildeten, in eine Umgebung der Gasdruckfeder mündenden Abluftkanal verbunden ist. Somit kann ein effektiver Gasaustausch zwischen dem innerhalb des zweiten Kolbens ausgebildeten vierten Kammervolumens und der Umgebung der Gasdruckfeder erfolgen.

Gemäß einer weiteren bevorzugten Weiterbildung ist vorgesehen, dass durch die Mittel zum Feststellen und Freigeben des zweiten Kolbens in der Kammer eine Minimalposition der ersten Kolbenstange einstellbar ist. Aufgrund dessen, dass eine Maximalposition der ersten Kolbenstange durch eine Länge der Kammer bzw. einen Anschlag am zweiten axialen Endabschnitt der Kammer definiert ist, kann somit ein Hub bzw. Verstellbereich der ersten Kolbenstange durch Einstellen bzw. Festlegen der Minimalposition der ersten Kolbenstange eingestellt werden.

Gemäß einer weiteren bevorzugten Weiterbildung ist vorgesehen, dass die zweite Kolbenstange aus der ersten Kolbenstange im Bereich des ersten Kolbens austritt, wobei zwischen dem ersten Kolben und der zweiten Kolbenstange eine Dichtung angeordnet ist. Durch Vorsehen der Dichtung zwischen dem ersten Kolben und der zweiten Kolbenstange ist dieser Bereich somit abgedichtet. Dadurch kann in vorteilhafter Weise ein in der ersten Kolbenstange und der zweiten Kolbenstange anliegender Gasdruck nicht in unerwünschter Weise aus der ersten Kolbenstange und/oder der zweiten Kolbenstange in die Kammer entweichen.

Gemäß einer weiteren bevorzugten Weiterbildung ist vorgesehen, dass ein Gasstrom zwischen einem, zwischen dem ersten axialen Endabschnitt der Kammer und dem Ventil angeordneten ersten Kammervolumen und einem, zwischen dem zweiten Kolben und dem Ventil angeordneten zweiten Kammervolumen mittels einem zwischen dem ersten axialen Endabschnitt der Kammer und dem zweiten Kolben angeordneten Ventil in einer geöffneten Stellung des Ventils freigegeben, und in einer geschlossenen Stellung des Ventils gesperrt wird. Bei geöffnetem Ventil ist der zweite Kolben aufgrund der Möglichkeit des Gasaustausches zwischen dem ersten Kammervolumen und dem zweiten Kammervolumen somit in der Kammer frei beweglich. Bei geschlossenem Ventil kann das in dem ersten Kammervolumen vorhandene Gas somit nicht entweichen und blockiert daher eine Bewegung des zweiten Kolbens in der Kammer.

Gemäß einer weiteren bevorzugten Weiterbildung ist vorgesehen, dass durch die Mittel zum Feststellen und Freigeben des zweiten Kolbens in der Kammer eine Minimalposition der ersten Kolbenstange eingestellt wird. Aufgrund dessen, dass eine Maximalposition der ersten Kolbenstange durch eine Länge der Kammer bzw. einen Anschlag am zweiten axialen Endabschnitt der Kammer definiert ist, kann somit ein Hub bzw. Verstellbereich der ersten Kolbenstange durch Einstellen bzw. Festlegen der Minimalposition der ersten Kolbenstange eingestellt werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Längsschnittansicht einer Gasdruckfeder gemäß einer bevorzugten Ausführungsform der Erfindung;
- Fig. 2: eine Längsschnittansicht der Gasdruckfeder gemäß der bevorzugten Ausführungsform der Erfindung;
- Fig. 3: eine Längsschnittansicht der Gasdruckfeder gemäß der bevorzugten Ausführungsform der Erfindung;
- Fig. 4: eine Längsschnittansicht der Gasdruckfeder gemäß der bevorzugten Ausführungsform der Erfindung;
- Fig. 5: eine Längsschnittansicht der Gasdruckfeder gemäß der bevorzugten Ausführungsform der Erfindung;
- Fig. 6: eine Längsschnittansicht der Gasdruckfeder gemäß der bevorzugten Ausführungsform der Erfindung;
- Fig. 7: eine Längsschnittansicht der Gasdruckfeder gemäß der bevorzugten Ausführungsform der Erfindung;
- Fig. 8: eine Längsschnittansicht eines ersten Teilabschnitts der Gasdruckfeder gemäß einer weiteren bevorzugten Ausführungsform der Erfindung;
- Fig. 9: eine Längsschnittansicht eines zweiten Teilabschnitts der Gasdruckfeder gemäß der weiteren bevorzugten Ausführungsform der Erfindung; und
- Fig. 10: ein Ablaufdiagramm eines Verfahrens zum Betreiben der Gasdruckfeder gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

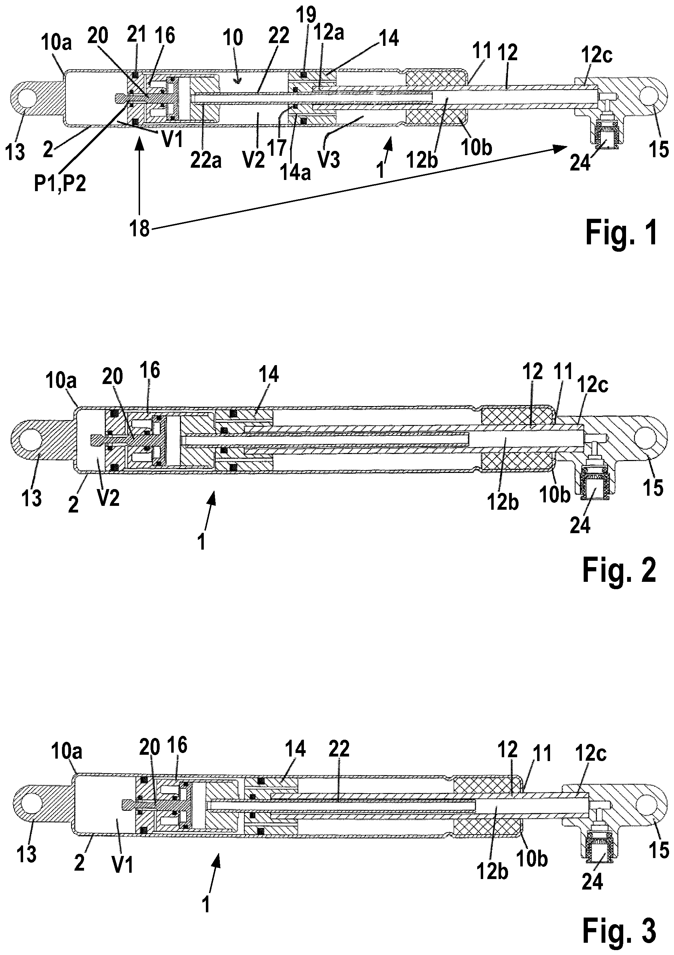

Fig. 1 zeigt eine Längsschnittansicht einer Gasdruckfeder gemäß einer bevorzugten Ausführungsform der Erfindung.

Die Gasdruckfeder 1 weist eine in einem Gehäuse 2 der Gasdruckfeder 1 im Wesentlichen hohl, vorzugsweise hohlzylindrisch ausgebildete Kammer 10 auf. Die Kammer 10 weist einen ersten axialen Endabschnitt 10a und einen zweiten axialen Endabschnitt 10b auf. An dem zweiten axialen Endabschnitt 10b weist die Kammer 10 eine Öffnung 11 auf. Des Weiteren weist die Gasdruckfeder 1 eine sich durch die Öffnung 11 erstreckende, axial verschiebbare, erste Kolbenstange 12 auf. Überdies weist die Gasdruckfeder 1 einen ersten Kolben 14 auf, welcher in der Kammer 10 angeordnet ist, wobei der erste Kolben 14 mit der ersten Kolbenstange 12 an einem, in der Kammer 10 angeordneten, axialen Endabschnitt 12a der ersten Kolbenstange 12 verbunden ist.

Des Weiteren weist die Gasdruckfeder 1 einen in der Kammer 10 angeordneten zweiten Kolben 16 auf. Der zweite Kolben 16 ist in der Kammer 10 zwischen dem ersten axialen Endabschnitt 10a und dem ersten Kolben 14 angeordnet. Darüber hinaus weist die Gasdruckfeder 1 Mittel 18 zum Feststellen und Freigeben des zweiten Kolbens 16 in der Kammer 10 zum Verstellen eines Hubs der ersten Kolbenstange 12 auf.

Die Mittel 18 zum Feststellen und Freigeben des zweiten Kolbens 16 in der Kammer 10 weisen ein zwischen dem ersten axialen Endabschnitt 10a der Kammer 10 und dem zweiten Kolben 16 angeordnetes Ventil 20 auf. Das Ventil 20 ist vorzugsweise dazu ausgebildet, in einer geöffneten Stellung P1 einen Gasstrom zwischen einem, zwischen dem ersten axialen Endabschnitt 10a der Kammer 10 und dem Ventil 20 angeordneten ersten Kammervolumen V1 und einem, zwischen dem zweiten Kolben 16 und dem Ventil 20 angeordneten zweiten Kammervolumen V2 freizugeben, und in einer geschlossenen Stellung P2 einen Gasstrom zwischen der ersten Kammervolumen V1 und dem zweiten Kammervolumen V2 zu sperren. An einem Außenumfang des Ventils 20 ist ferner eine Dichtung 21 angeordnet, welche die Dichtung 20 gegenüber einem Innenumfang der Kammer 10 abdichtet.

In dem ersten Kolben 14 ist überdies eine im Wesentlichen zylindrisch ausgebildete Durchgangsöffnung 14a ausgebildet. Die Durchgangsöffnung 14a des ersten Kolbens 14 ermöglicht einen Gasaustausch zwischen dem zweiten Kammervolumen V2 und einem zwischen dem ersten Kolben und dem zweiten axialen Endabschnitt der Kammer ausgebildeten dritten Kammervolumen V3. Das Ventil 20 sperrt in einer Grundstellung den Gasstrom zwischen dem ersten Kammervolumen V1 und dem zweiten Kammervolumen V2. Durch Anlegen eines Gasdrucks durch die Mittel zum Feststellen und Freigeben des zweiten Kolbens 16 in der Kammer 10 ist das Ventil 20 in die geöffnete Stellung P1 bewegbar. Anstelle des pneumatisch betätigbaren Ventils 20 kann beispielsweise ein anderes geeignetes Ventil wie z.B. ein Magnetventil verbaut werden.

Die erste Kolbenstange 12 ist im Wesentlichen hohl, vorzugsweise hohlzylindrisch ausgebildet. In einem Hohlraum 12b der ersten Kolbenstange 12 ist zumindest abschnittsweise eine, im Wesentlichen hohl, vorzugsweise hohlzylindrisch ausgebildete zweite Kolbenstange 22 angeordnet, wobei der zweite Kolben 16 mit der zweiten Kolbenstange 22 an einem, dem ersten axialen Endabschnitt 10a der Kammer 10 zugewandtem axialen Endabschnitt 22a der zweite Kolbenstange verbunden ist.

An einem außerhalb der Kammer 10 angeordneten axialen Endabschnitt 12c der ersten Kolbenstange 12 ist ein Druckluftschalter 24 angeordnet. Der Druckluftschalter 24 steht mit dem Ventil 20 in pneumatischer Verbindung. Der Druckluftschalter 24 ist dazu ausgebildet, das Ventil 20 anzusteuern. Das Ventil ist vorzugsweise durch ein 2/2-Wege-Ventil ausgebildet.

Die Mittel 18 zum Feststellen und Freigeben des zweiten Kolbens 16 in der Kammer 10 sind vorzugsweise dazu ausgebildet, eine Minimalposition der ersten Kolbenstange 12 einzustellen. Die zweite Kolbenstange 22 tritt aus der ersten Kolbenstange 12 vorzugsweise im Bereich des ersten Kolbens 14 aus. Zwischen dem ersten Kolben 14 und der zweiten Kolbenstange 22 ist eine Dichtung 17 angeordnet. Des Weiteren ist an einem Außenumfang des zweiten Kolbens 14 zwischen dem Außenumfang des zweiten Kolbens 14 und einem Innenumfang der Kammer 10 eine weitere Dichtung 19 angeordnet.

Darüber hinaus ist an dem ersten axialen Endabschnitt 10a der Kammer 10 ein erster Befestigungsabschnitt 13 der Gasdruckfeder 1 ausgebildet. An den außerhalb der Kammer 10 angeordneten axialen Endabschnitt 12c der ersten Kolbenstange 12 ist ein zweiter Befestigungsabschnitt 15 der Gasdruckfeder 1 ausgebildet. Die Gasdruckfeder 1 ist somit an dem ersten Befestigungsabschnitt 13 und an dem zweiten Befestigungsabschnitt 15 in einer entsprechenden Einbauposition befestigbar.

Durch Vorsehen des zweiten Kolbens 16 in Verbindung mit den Mitteln 18, welche das Ventil 20 und den Druckluftschalter 24 aufweisen, ist in vorteilhafter Weise ein Hub der ersten Kolbenstange 12 der Gasdruckfeder 1 nach entsprechenden Anforderungen durch Fixieren des zweitens Kolbens 16 in der Kammer 10 der Gasdruckfeder 1 möglich. Bei Beaufschlagung des Ventils 20 mit einem vorgegebenen Gasdruck kann das Ventil 20 somit aktuiert bzw. betätigt werden.

Fig. 2 zeigt eine Längsschnittansicht der Gasdruckfeder gemäß der bevorzugten Ausführungsform der Erfindung.

Während der Druckluftschalter 24 geöffnet ist und einen Gasdruck an das Ventil 20 anlegt, bleibt das Ventil 20 geöffnet und ermöglicht einen Gasaustausch zwischen dem ersten Kammervolumen V1 und dem zweiten Kammervolumen V2 der Kammer 10 der Gasdruckfeder 1. Gemäß der bevorzugten Ausführungsform sind der zweite Kolben 16 und das Ventil 20 integral ausgebildet. Somit bewegt sich das Ventil 20 bei Bewegung des zweiten Kolbens 16 stets mit diesem mit. Im vorliegenden Zustand liegt ein gleicher Druck im ersten Kammervolumen V1 und im zweiten Kammervolumen V2 der Kammer 10 an.

Ein Druckniveau des Gasdrucks in der Kammer 10 bleibt konstant, auch wenn sich der zweite Kolben 16 in der Kammer 10 bewegt. Der zweite Kolben 16 bewegt sich durch den anliegenden Gasdruck in Richtung des ersten Kolbens 14, bis der zweite Kolben 16 mit dem ersten Kolben 14 Kontakt bildet. Zu diesem Zeitpunkt werden sowohl der erste Kolben 14 als auch der zweite Kolben 16 in Richtung des zweiten axialen Endabschnitts 10b der Kammer 10 aufgrund des in der Kammer 10 vorherrschenden Gasdrucks gedrückt und die jeweiligen Kräfte von dem ersten Kolben und dem zweiten Kolben 16 auf die erste Kolbenstange 12 addieren sich.

Fig. 3 zeigt eine Längsschnittansicht der Gasdruckfeder gemäß der bevorzugten Ausführungsform der Erfindung. Im in Fig. 3 dargestellten Zustand bewegen sich der erste Kolben 14 und der zweite Kolben 16 in Richtung des zweiten axialen Endabschnitts 10b der Kammer 10 der Gasdruckfeder 1. Der erste Kolben 14 und der zweite Kolben 16 liegen aneinander an. Sowohl der Druckluftschalter 24 als auch, dadurch bedingt, das Ventil 20 sind geöffnet. Der anliegende Gasdruck drückt den zweiten Kolben 16, den ersten Kolben 14 und somit die mit diesem verbundene erste Kolbenstange 12 aus der Kammer 10 der Gasdruckfeder 1 heraus.

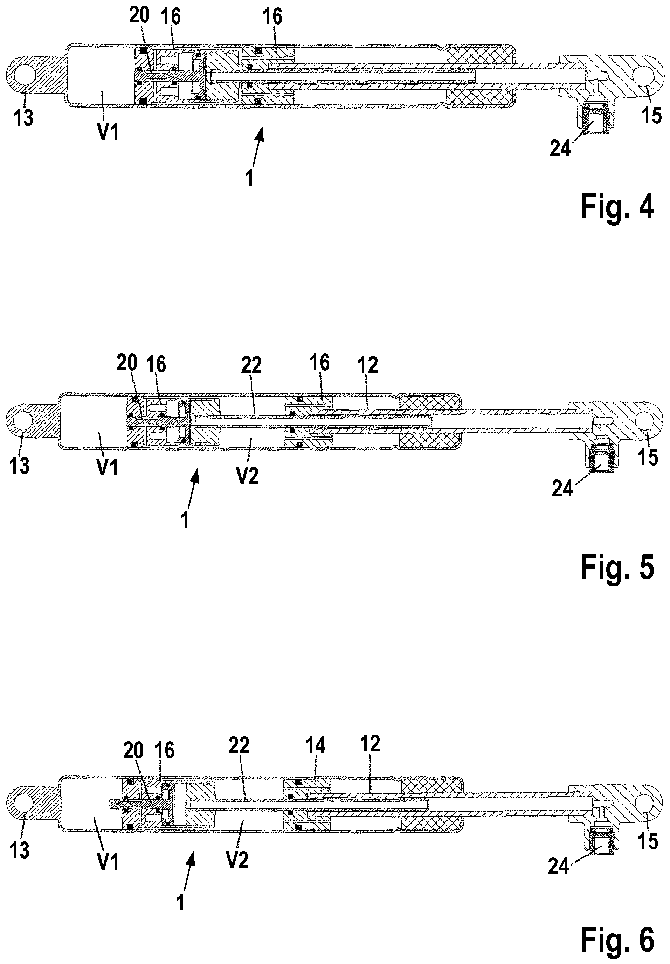

Fig. 4 zeigt eine Längsschnittansicht der Gasdruckfeder gemäß der bevorzugten Ausführungsform der Erfindung. Soll der Hub der Gasdruckfeder 1 auf eine bestimmte Länge begrenzt werden, so wird die Minimalposition des gewünschten Hubs der Gasdruckfeder 1 eingestellt und der Gasdruck eines an den Druckluftschalter 24 angeschlossenen Druckluftsystems wird nicht mehr erzeugt oder der Druckluftschalter 24 in eine geschlossene Stellung gestellt, sodass am Ventil 20 kein Gasdruck mehr anliegt. Das in dem zweiten Kolben 16 verbaute Ventil 20 schaltet somit in eine Sperrstellung und der Gasaustausch zwischen jeweiligen Seiten des zweiten Kolbens 16, d.h. zwischen dem ersten Kammervolumen V1 und dem zweiten Kammervolumen V2 wird unterbrochen. Der zweite Kolben 16 folgt damit nicht mehr dem ersten Kolben 14, wenn der erste Kolben 14 nach außen, d.h. in Richtung des zweiten axialen Endabschnitts 10b der Kammer 10, bewegt wird.

Fig. 5 zeigt eine Längsschnittansicht der Gasdruckfeder gemäß der bevorzugten Ausführungsform der Erfindung. Bei fixiertem zweiten Kolben 16 ist der Hub der Gasdruckfeder 1 somit begrenzt und nur mehr dieser begrenzte Hubbereich der Gasdruckfeder 1 verfügbar. Der erste Kolben 14 ist weiterhin innerhalb des begrenzten Hubbereichs innerhalb der Kammer 10 der Gasdruckfeder 1 bewegbar.

Fig. 6 zeigt eine Längsschnittansicht der Gasdruckfeder gemäß der bevorzugten Ausführungsform der Erfindung. Eine Begrenzung des Hubbereichs kann unabhängig von einer Position des ersten Kolbens 14 in der Kammer 10 der Gasdruckfeder 1 wieder zurückgenommen bzw. der zweite Kolben 16 freigegeben werden, indem durch den Druckluftschalter 24 ein vorgegebener Gasdruck an das Ventil 20 angelegt wird. Das Ventil 20 wird dadurch in eine geöffnete Stellung gestellt und der zweite Kolben 16 somit in Richtung des ersten Kolbens 14 bewegt, bis er mit diesem Kontakt bildet.

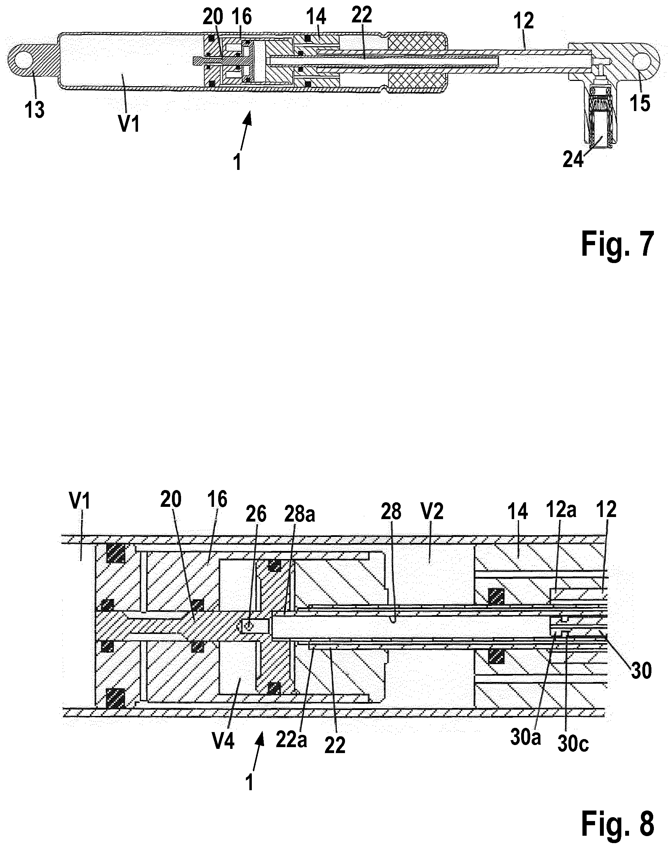

Fig. 7 zeigt eine Längsschnittansicht der Gasdruckfeder gemäß der bevorzugten Ausführungsform der Erfindung. Sobald der zweite Kolben 16 die Position des ersten Kolbens 14 in der Kammer 10 der Gasdruckfeder 1 erreicht, addieren sich wieder die Kräfte des ersten Kolbens 14 und des zweiten Kolbens 16 auf die erste Kolbenstange 12. Die Gasdruckfeder 1 ist nunmehr innerhalb eines gesamten verfügbaren Hubbereichs betreibbar. Dieser Zustand währt fort, bis der zweite Kolben 16 durch Absperren des Druckluftschalters 24 bzw. eines Ventils 20 in der Minimalposition fixiert wird.

Fig. 8 zeigt eine Längsschnittansicht eines ersten Teilabschnitts der Gasdruckfeder gemäß einer weiteren bevorzugten Ausführungsform der Erfindung. Gemäß der vorliegenden Ausführungsform sind zusätzlich zu der ersten Kolbenstange 12 und der zweiten Kolbenstange 22 eine dritte Kolbenstange 28 und eine vierte Kolbenstange 30 vorgesehen. Die dritte Kolbenstange 28 ist im Wesentlichen hohl, vorzugsweise hohlzylindrisch ausgebildet. Die dritte Kolbenstange 28 ist in einem Hohlraum der zweiten Kolbenstange 22 angeordnet.

Die dritte Kolbenstange 28 erstreckt sich zumindest abschnittsweise durch den zweiten Kolben 16 und zumindest abschnittsweise durch das Ventil 20. Die dritte Kolbenstange 28 endet in dem Ventil 20 und weist eine Öffnung 26 auf, welche mit einem innerhalb des zweiten Kolbens 16 ausgebildeten vierten Kammervolumen V4 kommuniziert. Das vierte Kammervolumen V4 ist ein im Inneren des zweiten Kolbens 16 ausgebildetes Volumen, in welchem das Ventil 20 in Axialrichtung der Gasdruckfeder 1 bewegbar ist.

Die vierte Kolbenstange 30 ist im Wesentlichen hohl, vorzugsweise hohlzylindrisch, ausgebildet und weist einen ersten axialen Endabschnitt 30a und eine zweiten axialen Endabschnitt 30b auf. Die vierte Kolbenstange 30 ist in einem Hohlraum der dritten Kolbenstange 28 angeordnet. Die vierte Kolbenstange 30 ist an einem (in Fig. 8 nicht gezeigten) axialen Endabschnitt 1a der Gasdruckfeder 1 befestigt. Die vierte Kolbenstange 30 ermöglicht somit in Kombination mit der dritten Kolbenstange 28 einen Gasaustausch des vierten Kammervolumens bei einem axialen Verstellen des Ventils 20 und einer damit verbundenen Verdrängung des in dem vierten Kammervolumen V4 angeordneten Gasvolumens mit einer Umgebung der Gasdruckfeder 1.

Die dritte Kolbenstange 28 ist ferner an einem axialen Endabschnitt 28a der dritten Kolbenstange 28 an dem zweiten Kolben 16 und dem Ventil 20 befestigt. Alternativ kann die dritte Kolbenstange 28 beispielsweise nur an dem Ventil 20 oder dem zweiten Kolben 16 befestigt sein. Die dritte Kolbenstange 28 bewegt sich somit bei einer Axialbewegung des zweiten Kolbens 16 in der Gasdruckfeder 1 mit dem zweiten Kolben 16 mit und wird durch die vierte Kolbenstange 30 axial gelagert, sodass sich die dritte Kolbenstange 28 bei einer Bewegung des zweiten Kolbens 16 relativ zur vierten Kolbenstange 30 bewegt.

Die vierte Kolbenstange 30 ist mittels einer Dichtung 30c gegenüber einer Innenoberfläche der dritten Kolbenstange 28 abgedichtet. Somit kann ein durch die Bewegung des Ventils 20 in dem vierten Kammervolumen V4 verdrängtes Gasvolumen über die Öffnung 26 in den Hohlraum der dritten Kolbenstange 28 und von dort in den Hohlraum der vierten Kolbenstange 30 geleitet werden, von welchem es an eine Umgebung der Gasdruckfeder 1 abgebbar ist. Ferner ist in der vorliegenden Ausführungsform die an dem Außenumfang des zweiten Kolbens 14 zwischen dem Außenumfang des zweiten Kolbens 14 und dem Innenumfang der Kammer 10 angeordnete Dichtung nicht vorgesehen.

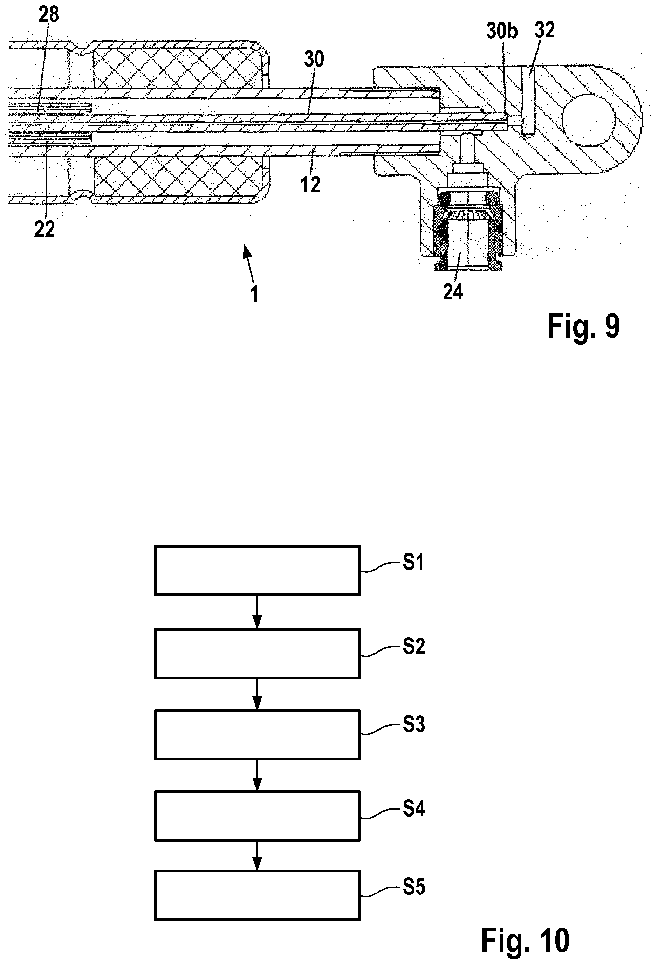

Fig. 9 zeigt eine Längsschnittansicht eines zweiten Teilabschnitts der Gasdruckfeder gemäß der weiteren bevorzugten Ausführungsform der Erfindung.

In der vorliegenden Darstellung ist der axiale Endabschnitt der Gasdruckfeder 1 im Bereich des Druckluftschalters 24 dargestellt. Die dritte Kolbenstange 28 endet in der vorliegenden Ausführungsform gemeinsam mit der zweiten Kolbenstange 22. Alternativ können die zweite Kolbenstange 22 und die dritte Kolbenstange 28 an verschiedenen Punkten innerhalb der ersten Kolbenstange 12 an einem zum Druckluftschalter 24 benachbarten Abschnitt der Gasdruckfeder 1 enden.
Die vierte Kolbenstange 30 weist den zweiten axialen Endabschnitt 30b auf, welcher an dem axialen Endabschnitt 1a der Gasdruckfeder 1 in einen Abluftkanal 32 mündet. Somit kann über die (in Fig. 9 nicht dargestellte) Öffnung der dritten Kolbenstange 28, der vierten Kolbenstange 30 und dem Abluftkanal 32 ein Gasaustausch des vierten Kammervolumens V4 mit der Umgebung der Gasdruckfeder 1 durchgeführt werden. Je nach Bewegungsrichtung des Ventils 20 in dem vierten Kammervolumen V4 kann somit Luft angesaugt oder abgegeben werden. Die vierte Kolbenstange 30 weist ferner keine Verbindung mit dem Druckluftschalter 24 auf. Der Druckluftschalter 24 speist lediglich einen Hohlraum der ersten Kolbenstange 12. Der Gasaustausch des vierten Kammervolumens V4 erfolgt somit unabhängig von der Betätigung des Druckluftschalters 24 zum Betätigen des Ventils 20.

Fig. 10 zeigt ein Ablaufdiagramm eines Verfahrens zum Betreiben der Gasdruckfeder gemäß der bevorzugten Ausführungsform der Erfindung. Das Verfahren zum Betreiben S1 der Gasdruckfeder umfasst ein Bereitstellen einer im Wesentlichen hohl ausgebildeten Kammer, die einen ersten axialen Endabschnitt und einen zweiten axialen Endabschnitt aufweist, wobei die Kammer an dem zweiten axialen Endabschnitt eine Öffnung aufweist. Das Verfahren umfasst des Weiteren ein Bereitstellen S2 einer sich durch die Öffnung erstreckenden, axial verschiebbaren, ersten Kolbenstange.

Das Verfahren umfasst überdies ein Bereitstellen S3 eines ersten Kolbens, welcher mit der ersten Kolbenstange an einem, in der Kammer angeordneten, axialen Endabschnitt der ersten Kolbenstange verbunden ist. Das Verfahren umfasst des Weiteren ein Bereitstellen S4 eines in der Kammer zwischen dem ersten axialen Endabschnitt und dem ersten Kolben angeordneten zweiten Kolbens. Das Verfahren umfasst darüber hinaus ein Feststellen oder Freigeben S5 des zweiten Kolbens in der Kammer zum Verstellen eines Hubs der ersten Kolbenstange durch Mittel.

Das Verfahren umfasst des Weiteren, dass ein Gasstrom zwischen einem, zwischen dem ersten axialen Endabschnitt der Kammer und dem Ventil angeordneten ersten Kammervolumen und einem, zwischen dem zweiten Kolben und dem Ventil angeordneten zweiten Kammervolumen mittels einem zwischen dem ersten axialen Endabschnitt der Kammer und dem zweiten Kolben angeordneten Ventil in einer geöffneten Stellung des Ventils freigegeben, und in einer geschlossenen Stellung des Ventils gesperrt wird. Das Verfahren umfasst überdies, dass durch die Mittel zum Feststellen und Freigeben des zweiten Kolbens in der Kammer eine Minimalposition der ersten Kolbenstange eingestellt wird.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise können eine Form, Abmessung und/oder Beschaffenheit der Komponenten der Gasdruckfeder abgeändert werden.

### Bezugszeichenliste

- 1: Gasdruckfeder
- 1a: axialer Endabschnitt der Gasdruckfeder
- 2: Gehäuse
- 10: Kammer
- 10a: erster axialer Endabschnitt
- 10b: zweiter axialer Endabschnitt
- 11: Öffnung
- 12: erste Kolbenstange
- 12a: axialer Endabschnitt
- 12b: Hohlraum der ersten Kolbenstange
- 12c: axialer Endabschnitt
- 13: erster Befestigungsabschnitt
- 14: erster Kolben
- 14a: Durchgangsöffnung
- 15: zweiter Befestigungsabschnitt
- 16: zweiter Kolben
- 17: Dichtung
- 18: Mittel
- 19: Dichtung
- 20: Ventil
- 21: Dichtung
- 22: zweite Kolbenstange
- 22a: axialer Endabschnitt
- 24: Druckluftschalter
- 26: Öffnung
- 28: dritte Kolbenstange
- 28a: axialer Endabschnitt
- 30: vierte Kolbenstange
- 30a: erster axialer Endabschnitt
- 30b: zweiter axialer Endabschnitt
- 32: Abluftkanal
- 30c: Dichtung
- P1: geöffnete Stellung
- P2: geschlossene Stellung
- V1: erstes Kammervolumen
- V2: zweites Kammervolumen
- V3: drittes Kammervolumen

## Patentansprüche

1. Gasdruckfeder (1), mit einer im Wesentlichen hohl ausgebildeten Kammer (10), die einen ersten axialen Endabschnitt (10a) und einen zweiten axialen Endabschnitt (10b) aufweist, wobei die Kammer (10) an dem zweiten axialen Endabschnitt (10b) eine Öffnung (11) aufweist;
mit einer sich durch die Öffnung (11) erstreckenden, axial verschiebbaren, ersten Kolbenstange (12);
mit einem ersten Kolben (14), welcher mit der ersten Kolbenstange (12) an einem, in der Kammer (10) angeordneten, axialen Endabschnitt (12a) der ersten Kolbenstange (12) verbunden ist, **gekennzeichnet durch** einen in der Kammer (10) zwischen dem ersten axialen Endabschnitt (10a) und dem ersten Kolben (14) angeordneten zweiten Kolben (16); und Mitteln (18) zum Feststellen und Freigeben des zweiten Kolbens (16) in der Kammer (10) zum Verstellen eines Hubs der ersten Kolbenstange (12);
**dadurch gekennzeichnet,**
dass die erste Kolbenstange (12) im Wesentlichen hohl ausgebildet ist, wobei in einem Hohlraum (12b) der ersten Kolbenstange (12) zumindest abschnittsweise eine, im Wesentlichen hohl ausgebildete zweite Kolbenstange (22) angeordnet ist, wobei der zweite Kolben (16) mit der zweiten Kolbenstange (22) an einem, dem ersten axialen Endabschnitt (10a) der Kammer (10) zugewandten axialen Endabschnitt (22a) der zweiten Kolbenstange (22) verbunden ist.

2. Gasdruckfeder nach Anspruch 1, **dadurch gekennzeichnet, dass** die Mittel (18) zum Feststellen und Freigeben des zweiten Kolbens (16) in der Kammer (10) ein zwischen dem ersten axialen Endabschnitt (10a) der Kammer (10) und dem zweiten Kolben (16) angeordnetes Ventil (20) aufweisen.

3. Gasdruckfeder nach Anspruch 2, **dadurch gekennzeichnet, dass** das Ventil (20) dazu ausgebildet ist, in einer geöffneten Stellung (P1) einen Gasstrom zwischen einem, zwischen dem ersten axialen Endabschnitt (10a) der Kammer (10) und dem Ventil (20) angeordneten ersten Kammervolumen (V1) und einem, zwischen dem zweiten Kolben (16) und dem Ventil (20) angeordneten zweiten Kammervolumen (V2) freizugeben, und in einer geschlossen Stellung (P2) einen Gasstrom zwischen dem ersten Kammervolumen (V1) und dem zweiten Kammervolumen (V2) zu sperren.

4. Gasdruckfeder nach Anspruch 2 oder 3, **dadurch gekennzeichnet, dass** das Ventil (20) in einer Grundstellung den Gasstrom zwischen dem ersten Kammervolumen (V1) und dem zweiten Kammervolumen (V2) sperrt, und durch Anlegen eines Gasdrucks in die geöffnete Stellung (P1) bewegbar ist.

5. Gasdruckfeder nach Anspruch 4, **dadurch gekennzeichnet, dass** die Mittel (18) zum Feststellen und Freigeben des zweiten Kolbens (16) in der Kammer (10) einen, an einem außerhalb der Kammer (10) angeordneten axialen Endabschnitt (12c) der ersten Kolbenstange (12) angeordneten Druckluftschalter (24) aufweisen, welcher mit dem Ventil (20) in pneumatischer Verbindung steht, wobei der Druckluftschalter (24) dazu ausgebildet ist, das Ventil (20) anzusteuern, und wobei das Ventil (20) durch ein 2/2-Wege-Ventil ausgebildet ist.

6. Gasdruckfeder nach einem der vorhergehenden Ansprüche, **dadurch gekennzeichnet, dass** eine dritte Kolbenstange (28) vorgesehen ist, welche zumindest abschnittsweise in einem Hohlraum der zweiten Kolbenstange (22) und zumindest abschnittsweise in dem Ventil (20) angeordnet ist, wobei die dritte Kolbenstange (28) im Wesentlichen hohl ausgebildet ist und im Bereich des Ventils (20) eine Öffnung (26) aufweist, welche mit einem innerhalb des zweiten Kolbens (16) ausgebildeten vierten Kammervolumen (V4) kommuniziert.

7. Gasdruckfeder nach Anspruch 6, **dadurch gekennzeichnet, dass** eine vierte Kolbenstange (30) vorgesehen ist, welche zumindest abschnittsweise in einem Hohlraum der dritten Kolbenstange (28) angeordnet ist, wobei die vierte Kolbenstange (30) im Wesentlichen hohl ausgebildet und an einem axialen Endabschnitt (1a) der Gasdruckfeder (1) befestigt ist, wobei dritte Kolbenstange (28) und die vierte Kolbenstange (30) derart zusammenwirken, dass bei einem axialen Verstellen des Ventils (20) und einer damit verbundenen Verdrängung eines in dem vierten Kammervolumen (V4) angeordneten Gasvolumens ein Gasaustausch des vierten Kammervolumens (V4) mit einer Umgebung der Gasdruckfeder (1).

8. Gasdruckfeder nach Anspruch 7, **dadurch gekennzeichnet, dass** die dritte Kolbenstange (28) bei einer Axialbewegung des zweiten Kolbens (16) in der Gasdruckfeder (1) mit dem zweiten Kolben (16) mit bewegbar ist, und durch die vierte Kolbenstange (30) axial gelagert ist, wobei die dritte Kolbenstange (28) bei einer Bewegung des zweiten Kolbens (16) relativ zur vierten Kolbenstange (30) bewegbar ist.

9. Gasdruckfeder nach Anspruch 7 oder 8, **dadurch gekennzeichnet, dass** die vierte Kolbenstange (30) im Bereich eines axialen Endabschnitts (30b) mit einem in dem axialen Endabschnitt (1a) der Gasdruckfeder (1) ausgebildeten, in eine Umgebung der Gasdruckfeder (1) mündenden Abluftkanal (32) verbunden ist.

10. Gasdruckfeder nach einem der vorhergehenden Ansprüche, **dadurch gekennzeichnet, dass** durch die Mittel (18) zum Feststellen und Freigeben des zweiten Kolbens (16) in der Kammer (10) eine Minimalposition der ersten Kolbenstange (12) einstellbar ist.

11. Gasdruckfeder nach einem der vorhergehenden Ansprüche, **dadurch gekennzeichnet, dass** die zweite Kolbenstange (22) aus der ersten Kolbenstange (12) im Bereich des ersten Kolbens (14) austritt, wobei zwischen dem ersten Kolben (14) und der zweiten Kolbenstange (22) eine Dichtung (17) angeordnet ist.

## Claims

1. Gas pressure spring (1) having an essentially hollow chamber (10) which has a first axial end portion (10a) and a second axial end portion (10b), wherein the chamber (10) has an opening (11) at the second axial end portion (10b);
having an axially displaceably, first piston rod (12), which extends through the opening (11); having a first piston (14), which is connected to the first piston rod (12) at an axial end portion (12a) of the first piston rod (12), said axial end portion being arranged in the chamber (10), **characterized by**
a second piston (16), which is arranged in the chamber (10) between the first axial end portion (10a) and the first piston (14); and
means (18) for arresting and freeing the second piston (16) in the chamber (10) for the purpose of adjusting an amount of travel of the first piston rod (12);
**characterized**
**in that** the first piston rod (12) is essentially hollow, wherein an essentially hollow second piston rod (22) is arranged, at least in part, in a cavity (12b) of the first piston rod (12), wherein the second piston (16) is connected to the second piston rod (22) at an axial end portion (22a) of the second piston rod (22), said axial end portion being directed towards the first axial end portion (10a) of the chamber (10).

2. Gas pressure spring according to Claim 1, **characterized in that** the means (18) for arresting and freeing the second piston (16) in the chamber (10) have a valve (20), which is arranged between the first axial end portion (10a) of the chamber (10) and the second piston (16).

3. Gas pressure spring according to Claim 2, **characterized in that** the valve (20) is designed so that, in an open position (P1), it frees a gas stream between a first chamber volume (V1), which is arranged between the first axial end portion (10a) of the chamber (10) and the valve (20), and a second chamber volume (V2), which is arranged between the second piston (16) and the valve (20), and, in a closed position (P2), it blocks a gas stream between the first chamber volume (V1) and the second chamber volume (V2).

4. Gas pressure spring according to Claim 2 or 3, **characterized in that**, in a normal position, the valve (20) blocks the gas stream between the first chamber volume (V1) and the second chamber volume (V2), and it can be moved into the open position (P1) by a gas pressure being applied.

5. Gas pressure spring according to Claim 4, **characterized in that** the means (18) for arresting and freeing the second piston (16) in the chamber (10) have a compressed-air switch (24), which is arranged at an axial end portion (12c) of the first piston rod (12), said axial end portion being arranged outside the chamber (10), and is pneumatically connected to the valve (20), wherein the compressed-air switch (24) is designed to activate the valve (20), and wherein the valve (20) is formed by a 2/2-way valve.

6. Gas pressure spring according to one of the preceding claims, **characterized by** the provision of a third piston rod (28), which is arranged, at least in part, in a cavity of the second piston rod (22) and, at least in part, in the valve (20), wherein the third piston rod (28) is essentially hollow and, in the region of the valve (20), has an opening (26) which communicates with a fourth chamber volume (V4), which is formed within the second piston (16).

7. Gas pressure spring according to Claim 6, **characterized by** the provision of a fourth piston rod (30), which is arranged, at least in part, in a cavity of the third piston rod (28), wherein the fourth piston rod (30) is essentially hollow and is fastened on an axial end portion (1a) of the gas pressure spring (1), wherein the third piston rod (28) and the fourth piston rod (30) interact such that, in the case of axial adjustment of the valve (20) and associated displacement of a gas volume arranged in the fourth chamber volume (V4), a gas exchange between the fourth chamber volume (V4) and an area surrounding the gas pressure spring (1).

8. Gas pressure spring according to Claim 7, **characterized in that** the third piston rod (28) can be moved along with the second piston (16) upon axial movement of the second piston (16) in the gas pressure spring (1), and is mounted axially by way of the fourth piston rod (30), wherein the third piston rod (28) can be moved relative to the fourth piston rod (30) when the second piston (16) moves.

9. Gas pressure spring according to Claim 7 or 8, **characterized in that**, in the region of an axial end portion (30b), the fourth piston rod (30) is connected to an exhaust-air channel (32), which is formed in the axial end portion (1a) of the gas pressure spring (1) and opens out into an area surrounding the gas pressure spring (1).

10. Gas pressure spring according to one of the preceding claims, **characterized in that** a minimum position of the first piston rod (12) can be set by the means (18) for arresting and freeing the second piston (16) in the chamber (10).

11. Gas pressure spring according to one of the preceding claims, **characterized in that** the second piston rod (22) exits from the first piston rod (12) in the region of the first piston (14), wherein a seal (17) is arranged between the first piston (14) and the second piston rod (22).

## Revendications

1. Ressort de compression à gaz (1), comprenant une chambre (10) réalisée sous forme essentiellement creuse, qui présente une première portion d'extrémité axiale (10a) et une deuxième portion d'extrémité axiale (10b), la chambre (10) présentant, au niveau de la deuxième portion d'extrémité axiale (10b), une ouverture (11) ; avec une première tige de piston (12) déplaçable axialement, s'étendant à travers l'ouverture (11) ;
avec un premier piston (14) qui est connecté à la première tige de piston (12) au niveau d'une portion d'extrémité axiale (12a) de la première tige de piston (12), disposée dans la chambre (10), **caractérisé par** un deuxième piston (16) disposé dans la chambre (10) entre la première portion d'extrémité axiale (10a) et le premier piston (14) ; et
des moyens (18) pour fixer et libérer le deuxième piston (16) dans la chambre (10) en vue de régler une course de la première tige de piston (12) ;
**caractérisé en ce que**
la première tige de piston (12) est réalisée sous forme essentiellement creuse, une deuxième tige de piston (22) réalisée de manière essentiellement creuse étant disposée au moins en partie dans une cavité (12b) de la première tige de piston (12), le deuxième piston (16) étant connecté à la deuxième tige de piston (22) au niveau d'une portion d'extrémité axiale (22a) de la deuxième tige de piston (22) tournée vers la première portion d'extrémité axiale (10a) de la chambre (10) .

2. Ressort de compression à gaz selon la revendication 1, **caractérisé en ce que** les moyens (18) pour fixer et libérer le deuxième piston (16) dans la chambre (10) présentent une soupape (20) disposée entre la première portion d'extrémité axiale (10a) de la chambre (10) et le deuxième piston (16).

3. Ressort de compression à gaz selon la revendication 2, **caractérisé en ce que** la soupape (20) est réalisée de manière à libérer, dans une position ouverte (P1), un flux de gaz entre un premier volume de chambre (V1) disposé entre la première portion d'extrémité axiale (10a) de la chambre (10) et la soupape (20) et un deuxième volume de chambre (V2) disposé entre le deuxième piston (16) et la soupape (20) et de manière à bloquer, dans une position fermée (P2), un flux de gaz entre le premier volume de chambre (V1) et le deuxième volume de chambre (V2).

4. Ressort de compression à gaz selon la revendication 2 ou 3, **caractérisé en ce que** la soupape (20), dans une position de base, bloque le flux de gaz entre le premier volume de chambre (V1) et le deuxième volume de chambre (V2), et peut être déplacée dans la position ouverte (P1) par application d'une pression de gaz.

5. Ressort de compression à gaz selon la revendication 4, **caractérisé en ce que** les moyens (18) pour fixer et libérer le deuxième piston (16) dans la chambre (10) présentent un commutateur à air comprimé (24) disposé au niveau d'une portion d'extrémité axiale (12c) de la première tige de piston (12) disposée à l'extérieur de la chambre (10), lequel est en liaison pneumatique avec la soupape (20), le commutateur à air comprimé (24) étant réalisé de manière à piloter la soupape (20), la soupape (20) étant réalisée par une soupape à 2/2 voies.

6. Ressort de compression à gaz selon l'une quelconque des revendications précédentes, **caractérisé en ce qu'**une troisième tige de piston (28) est prévue, laquelle est disposée au moins en partie dans une cavité de la deuxième tige de piston (22) et au moins en partie dans la soupape (20), la troisième tige de piston (28) étant réalisée de manière essentiellement creuse et présentant dans la région de la soupape (20) une ouverture (26) qui communique avec un quatrième volume de chambre (V4) réalisé à l'intérieur du deuxième piston (16).

7. Ressort de compression à gaz selon la revendication 6, **caractérisé en ce qu'**une quatrième tige de piston (30) est prévue, laquelle est disposée au moins en partie dans une cavité de la troisième tige de piston (28), la quatrième tige de piston (30) étant réalisée sous forme essentiellement creuse et étant fixée au niveau d'une portion d'extrémité axiale (1a) du ressort de compression à gaz (1), la troisième tige de piston (28) et la quatrième tige de piston (30) coopérant de telle sorte que dans le cas d'un réglage axial de la soupape (20) et d'un déplacement associé d'un volume de gaz disposé dans le quatrième volume de chambre (V4), un échange de gaz du quatrième volume de chambre (V4) avec un environnement du ressort de compression à gaz (1).

8. Ressort de compression à gaz selon la revendication 7, **caractérisé en ce que** la troisième tige de piston (28), dans le cas d'un déplacement axial du deuxième piston (16) dans le ressort de compression à gaz (1), peut être entraînée avec le deuxième piston (16), et est supportée axialement par la quatrième tige de piston (30), la troisième tige de piston (28) pouvant être déplacée dans le cas d'un déplacement du deuxième piston (16) par rapport à la quatrième tige de piston (30).

9. Ressort de compression à gaz selon la revendication 7 ou 8, **caractérisé en ce que** la quatrième tige de piston (30), dans la région d'une portion d'extrémité axiale (30b), est connectée à un canal d'évacuation d'air (32) réalisé dans la portion d'extrémité axiale (1a) du ressort de compression à gaz (1), débouchant dans un environnement du ressort de compression à gaz (1) .

10. Ressort de compression à gaz selon l'une quelconque des revendications précédentes, **caractérisé en ce qu'**une position minimale de la première tige de piston (12) peut être ajustée par les moyens (18) pour fixer et libérer le deuxième piston (16) dans la chambre (10).

11. Ressort de compression à gaz selon l'une quelconque des revendications précédentes, **caractérisé en ce que** la deuxième tige de piston (22) sort de la première tige de piston (12) dans la région du premier piston (14), un joint d'étanchéité (17) étant disposé entre le premier piston (14) et la deuxième tige de piston (22).
